# FASCICULE DE BREVET EUROPEEN

(11) **EP 3 520 957 B1**
(45) Date de publication et mention de la délivrance du brevet: **05.08.2020**
(21) Numéro de dépôt: 19154503.7
(22) Date de dépôt: 30.01.2019
(51) Int. Cl.: B23Q 7/10, B23Q 7/14, B66F 9/07, B65G 1/04, B65G 1/06

(54) **DISPOSITIF DE MANUTENTION DE PIECES STOCKEES SUR PALETTES POSITIONNABLE AU VOISINAGE D'UN CENTRE D'USINAGE**
FÖRDERVORRICHTUNG FÜR AUF PALETTEN GELAGERTEN TEILEN, DIE IN DER NÄHE EINES VERABEITUNGSZENTRUMS POSITIONIERBAR IST
DEVICE FOR HANDLING PARTS STORED ON PALLETS POSITIONABLE IN THE VICINITY OF A MACHINING CENTRE

(30) Priorité: 02.02.2018 FR 1850885
(43) Date de publication de la demande: 07.08.2019
(73) Titulaire: Etablissements Oger, 53000 Laval (FR)
(72) Inventeur: HIMMER, Hervé, 53940 SAINT BERTHEVIN (FR)
(74) Mandataire: Godineau, Valérie

(56) Documents cités:
- DE-U1- 9 218 147
- DE-U1-202006 006 539
- US-A- 4 035 904

## Description

### DOMAINE DE L'INVENTION

L'invention concerne un dispositif de manutention de pièces stockées sur palettes positionnable au voisinage d'un centre d'usinage.

Elle concerne plus particulièrement un dispositif de manutention comprenant un châssis équipé de porte-palettes, un préhenseur, et un système de transfert pour le transfert des pièces à traiter entre le dispositif de manutention et le centre d'usinage, ledit châssis délimitant une enceinte comprenant une allée centrale bordée latéralement des porte-palettes organisés en lignes et en colonnes, le préhenseur comprenant deux montants équipés d'organes de préhension en regard montés mobiles en monte et baisse le long desdits montants, lesdits montants positionnables au moins dans l'allée centrale étant couplés à un système d'entrainement en déplacement des montants à l'intérieur de ladite enceinte suivant au moins deux axes orthogonaux entre eux, l'un des axes correspondant à un axe parallèle à l'axe longitudinal de l'allée centrale,

### ART ANTÉRIEUR

Un tel dispositif est connu comme l'illustre le brevet US-4.035.904. En effet, les chargeurs en palettes d'une machine-outil sont connus comme l'illustrent par exemple les documents FR2874525, EP 0 357 775 ou EP 2 620 392. Toutefois, jusqu'à présent, de tels dispositifs de manutention sont soit encombrants, soit complexes sur le plan mécanique.

### BUTS ET RÉSUMÉ

Un but de l'invention est de proposer un dispositif de manutention de pièces du type précité dont la conception permet l'obtention d'un dispositif compact sans nuire à la simplicité de fabrication et d'utilisation d'un tel dispositif.

À cet effet, l'invention a pour objet un dispositif de manutention de pièces stockées sur palettes positionnable au voisinage d'un centre d'usinage, ce dispositif de manutention comprenant un châssis équipé de porte-palettes, un préhenseur et un système de transfert pour le transfert des pièces à traiter entre le dispositif de manutention et le centre d'usinage, ledit châssis délimitant une enceinte comprenant une allée centrale bordée latéralement des porte-palettes organisés en lignes et en colonnes, le préhenseur comprenant deux montants équipés d'organes de préhension en regard montés mobiles en monte et baisse le long desdits montants, lesdits montants positionnables au moins dans l'allée centrale étant couplés à un système d'entrainement en déplacement des montants à l'intérieur de ladite enceinte suivant au moins deux axes orthogonaux entre eux, l'un des axes correspondant à un axe parallèle à l'axe longitudinal de l'allée centrale, caractérisé en ce que le système de transfert comprend un plateau, dit de transfert, monté mobile suivant une direction transversale à l'axe longitudinal de l'allée centrale entre une zone dite intérieure, dans laquelle il est disposé à l'intérieur de l'enceinte et est apte à coopérer avec le préhenseur, pour le transfert d'une palette entre le préhenseur et le plateau de transfert, et une zone dite extérieure, dans laquelle il fait au moins partiellement saillie à l'extérieur de l'enceinte, et est apte à déposer ou prélever une palette dans le centre d'usinage, et en ce que les montants du préhenseur sont positionnables d'une part, de part et d'autre du plateau de transfert, d'autre part, de part et d'autre de l'un quelconque des porte-palettes, pour permettre, à l'aide des organes de préhension équipant lesdits montants, une prise par le dessous d'une palette reposant sur le porte-palette ou sur le plateau de transfert, ou une pose d'une palette sur le porte-palette ou sur le plateau de transfert.

La conception du dispositif permet de disposer d'une zone de chargement/déchargement en palettes du dispositif qui peut être unique. De même, la conception du dispositif permet de disposer d'une zone de transfert unique. Il en résulte une simplicité du dispositif. Enfin, les conceptions mécaniques du préhenseur et du système de transfert rendent l'ensemble du dispositif aisé à fabriquer.

Selon un mode de réalisation de l'invention, les porte-palettes sont stationnaires à l'intérieur de l'enceinte délimitée par le châssis.

Il en résulte une simplicité de mise en œuvre pour l'opérateur dont la mission est de charger et décharger les palettes du dispositif.

Selon un mode de réalisation de l'invention, les porte-palettes présentent une face de dessus sur laquelle une palette est apte à reposer par sa face dite du dessous, la face du dessus des porte-palettes étant munie de motifs en creux ou en relief aptes à coopérer avec des motifs de forme complémentaires aptes à être ménagés sur la face du dessous des palettes positionnables sur les porte-palettes.

Cette disposition permet un positionnement sûr et précis des palettes sur les porte-palettes.

Selon un mode de réalisation de l'invention, le système d'entrainement des montants comprend un cadre, dit horizontal, quadrangulaire monté sur le châssis à coulissement suivant une direction parallèle à l'axe longitudinal de l'allée centrale, ce cadre logeant un support auquel les montants sont couplés, ce support étant monté mobile à coulissement le long des bords dits transversaux du cadre, ces bords transversaux du cadre s'étendant orthogonalement à l'axe longitudinal de l'allée central.

Les mouvements du système d'entrainement sont ainsi uniquement des mouvements simples de translation.

Selon un mode de réalisation de l'invention, chaque montant comprend un organe de transmission sans fin et des moyens d'entrainement en déplacement dudit organe de transmission sans fin, ledit organe de transmission sans fin affectant la forme d'une boucle sans fin avec un brin aller et un brin retour de la boucle s'étendant parallèlement à l'axe longitudinal du montant, chaque organe de préhension équipant un montant étant couplé à l'un des brins de la boucle.

Selon un mode de réalisation de l'invention, chaque organe de préhension équipant un montant affecte la forme d'un doigt, d'un taquet ou d'une cornière en L.

Cette disposition permet une prise par le dessous des palettes reposant sur les porte-palettes ou le plateau de transfert et une pose par le dessus des palettes sur les porte-palettes ou sur le plateau de transfert, les palettes étant dimensionnées pour s'étendre au-delà des porte-palettes.

Selon un mode de réalisation de l'invention, le plateau de transfert est, pour son déplacement suivant une direction transversale à l'axe longitudinal de l'allée centrale entre la zone intérieure et la zone extérieure, couplé à coulissement à un support délimitant un chemin de guidage du plateau de transfert, ce support étant monté mobile en monte et baisse par rapport au châssis.

À nouveau, la cinématique du plateau de transfert est simplifiée.

Selon un mode de réalisation de l'invention, le plateau de transfert s'étend en porte-à-faux par rapport au chemin de guidage, dans la position dans laquelle il est disposé dans la zone extérieure.

Il est ainsi possible d'atteindre un centre d'usinage positionné à écartement du dispositif de manutention.

Selon un mode de réalisation de l'invention, le support est un support mobile suivant une direction orthogonale à l'axe longitudinal de l'allée centrale pour former avec le plateau de transfert un ensemble télescopique.

Cette conception permet un déchargement ou un chargement aisé d'une palette au niveau du centre d'usinage à l'aide du plateau de transfert sans nuire à la course de déplacement dudit plateau de transfert.

Selon un mode de réalisation de l'invention, le plateau de transfert est, à l'état disposé dans la zone intérieure, configuré pour occuper au moins une première position, dans laquelle il est disposé dans l'allée centrale, et une deuxième position, dans laquelle il est disposé dans l'une des zones porte-palettes bordant l'allée centrale.

### BRÈVE DESCRIPTION DES FIGURES

L'invention sera bien comprise à la lecture de la description suivante d'exemples de réalisation, en référence aux dessins annexés dans lesquels :

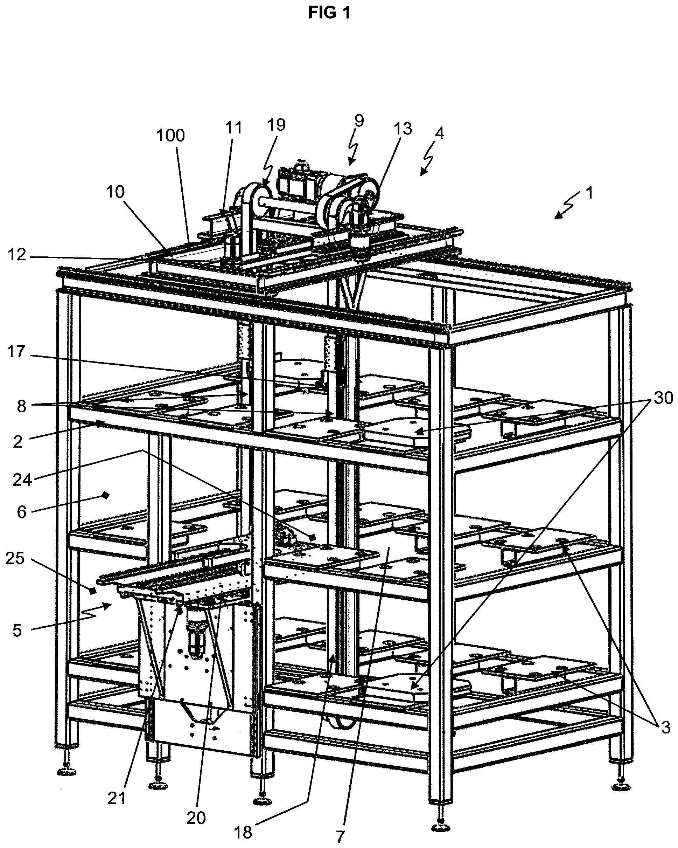

La figure 1 représente une vue en perspective d'un dispositif de manutention conforme à l'invention, les montants du préhenseur étant disposés dans l'allée centrale au niveau du système de transfert.

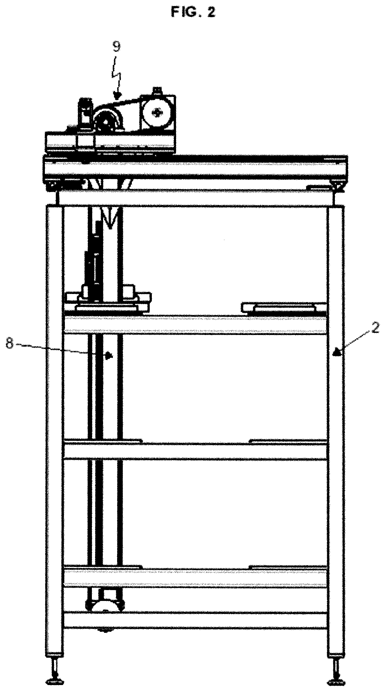

La figure 2 représente une vue de côté du dispositif de la figure 1, le système de transfert ayant été omis

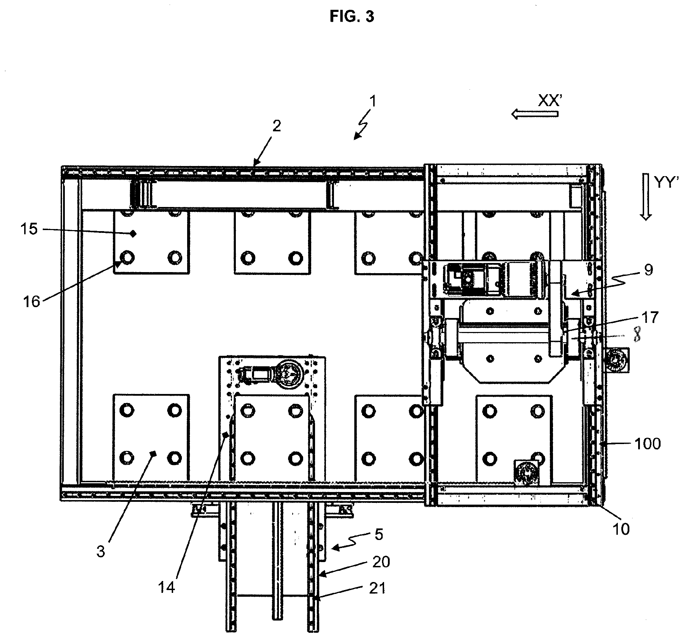

La figure 3 représente une vue de dessus d'un dispositif de manutention conforme à l'invention, les montants du préhenseur étant disposés dans l'allée centrale à une extrémité de l'allée ;
La figure 4 représente une vue en perspective d'un préhenseur conforme à l'invention, une palette étant portée par les organes de préhension équipant les montants du préhenseur,

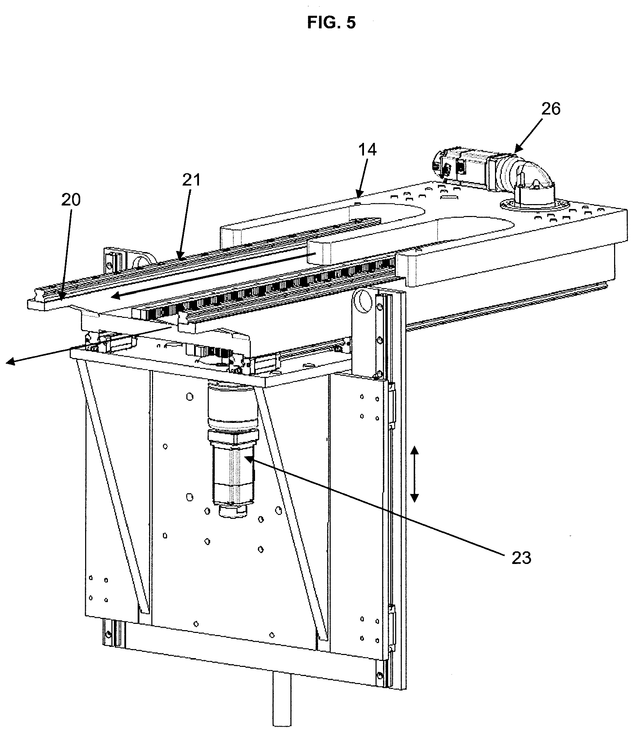

La figure 5 représente une vue en perspective d'un système de transfert à l'état positionné du plateau de transfert à l'intérieur de l'enceinte ;

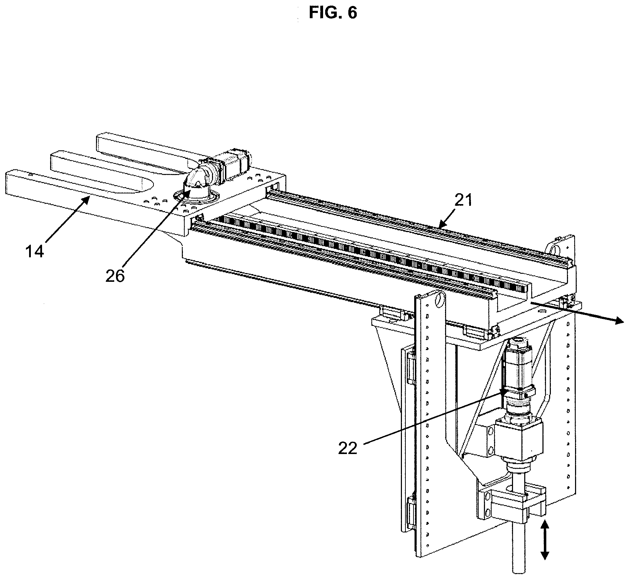

La figure 6 représente une vue en perspective d'un système de transfert à l'état positionné du plateau de transfert au moins partiellement à l'extérieur de l'enceinte ;

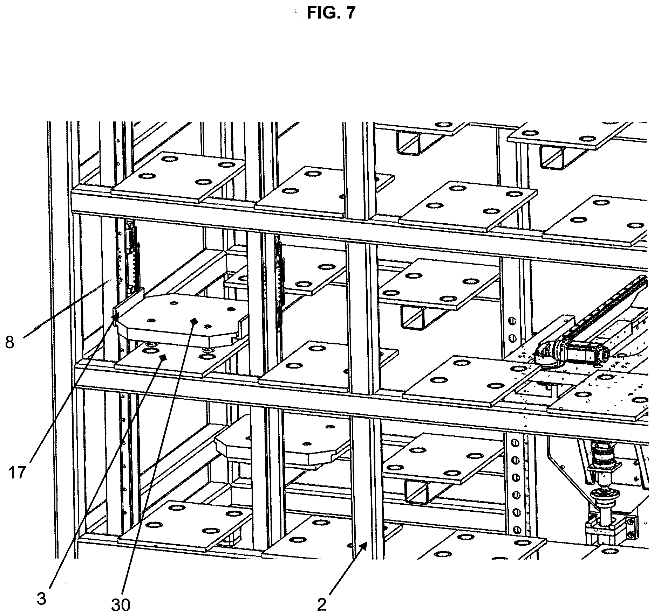

La figure 7 représente une vue partielle en perspective d'un dispositif conforme à l'invention à l'état positionné des montants du préhenseur de part et d'autre d'un porte-palette et à l'état saisi d'une palette par les organes de préhension du préhenseur ;

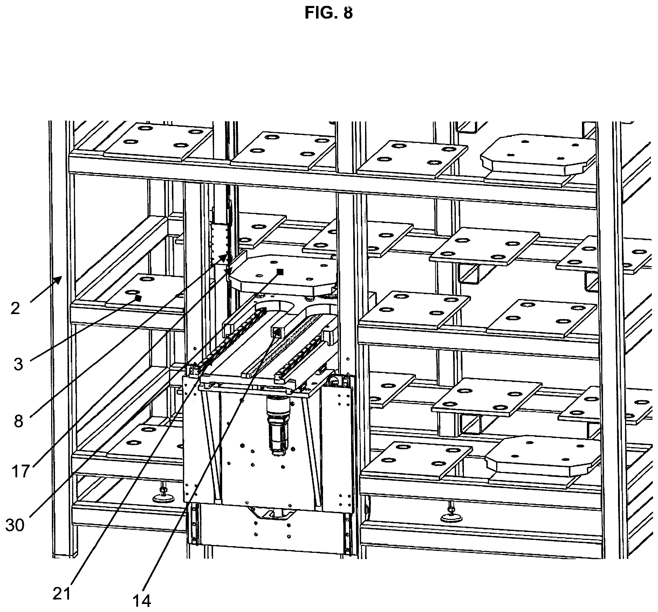

La figure 8 représente une vue partielle en perspective d'un dispositif conforme à l'invention à l'état positionné des montants du préhenseur de part et d'autre du plateau de transfert et à l'état saisi d'une palette par les organes de préhension du préhenseur ;

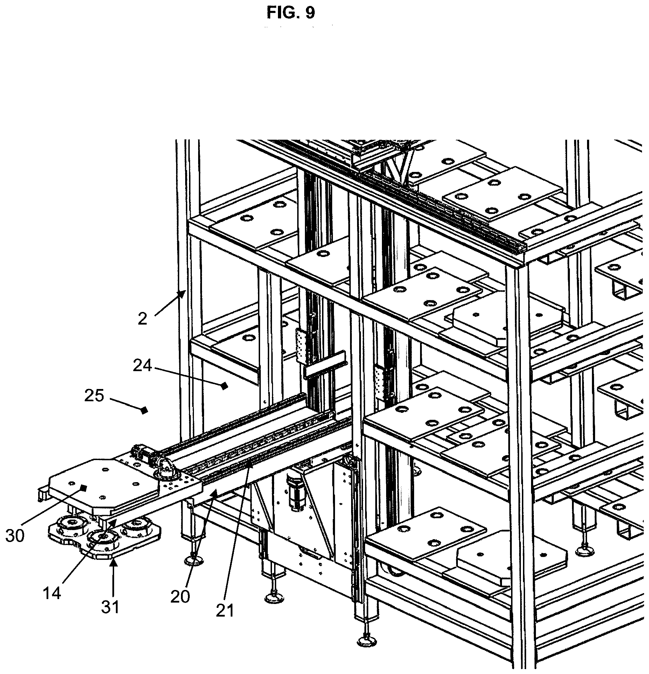

La figure 9 représente une vue partielle en perspective d'un dispositif conforme à l'invention à l'état positionné du plateau de transfert en saillie de l'enceinte du châssis au-dessus d'une partie d'un centre d'usinage.

### DESCRIPTION DÉTAILLÉE

Comme mentionné ci-dessus, le dispositif 1 de manutention de pièce, objet de l'invention, est plus particulièrement destiné à être positionné au voisinage d'un centre 31 d'usinage à commande numérique, c'est-à-dire généralement à moins de 2 mètres du centre d'usinage, pour permettre le déplacement automatique des pièces à usiner stockées sur des palettes 30 du dispositif de manutention vers le centre 31 d'usinage, et des pièces usinées du centre 31 d'usinage vers le centre de manutention en l'absence de tout opérateur.

Ce dispositif 1 de manutention comprend un châssis 2 équipé de porte-palettes 3, un préhenseur 4 et un système 5 de transfert pour le transfert des pièces à traiter, et en particulier à usiner, entre le dispositif 1 de manutention et le centre 31 d'usinage.

Le châssis 2 délimite une enceinte 6 de forme générale parallélépipédique comprenant une allée 7 centrale bordée latéralement des porte-palettes 3 stationnaires logés à l'intérieur de l'enceinte 6 et organisés en lignes et en colonnes.

Dans l'exemple représenté, le châssis 2 est une structure mécanosoudée formée de cadres horizontaux superposés, maintenus à écartement les uns des autres par des montants disposés aux angles des cadres. Les cadres les plus inférieurs sont interrompus pour ménager à l'aide de deux montants supplémentaires une fenêtre à l'intérieur de laquelle le système 5 de transfert est logé.

L'enceinte 6 du châssis 2 est donc formée par l'espace intérieur des cadres. Des panneaux d'habillage peuvent être rapportés sur la structure mécanosoudée, en au moins certains emplacements de ladite structure.

Chaque porte-palette 3 qui se présente sous forme d'une plaque est fixé à un côté dit longitudinal du cadre. Dans l'exemple représenté, les porte-palettes sont fixés par rangée de quatre porte-palettes à l'un des côtés longitudinaux de chaque cadre, et par rangée de trois ou quatre porte-palettes à l'autre des côtés longitudinaux de chaque cadre. Trois cadres superposés sont équipés chacun de deux rangées de porte-palettes.

L'espace laissé libre entre les rangées de porte-palettes en regard forme l'allée 7 centrale du châssis 2. Chaque porte-palette 3 présente une face 15 du dessus sur laquelle une palette 30 est apte à reposer par sa face dite du dessous en s'étendant en saillie de la face 15 du dessus du porte-palette 3. La face 15 du dessus des porte-palettes 3 est munie de motifs 16 en creux, en l'occurrence ici des cavités, aptes à coopérer avec des motifs complémentaires, tels que des plots, ménagés sur la face du dessous de palettes 30 positionnables sur les porte-palettes 3, la face du dessous de ces palettes formant la face d'appui des palettes sur les porte-palettes. Bien évidemment, et de manière équivalente, la face du dessus des porte-palettes aurait pu être munie de motifs en relief, la face du dessous des palettes étant munie de motifs en creux.

Ainsi, à l'état posé d'une palette 31 sur un porte-palette 3, les plots de la palette 31 s'insèrent dans les cavités du porte-palette, garantissant un positionnement précis et sûr de la palette qui se présente sous forme d'une plaque sur le porte-palette.

L'un des porte-palettes forme un poste de chargement en palettes du dispositif 1 de manutention. L'opérateur positionne ainsi chaque palette à traiter sur ce porte-palette avant que cette palette soit prise en charge par le préhenseur.

Le préhenseur 4 de palette comprend quant à lui deux montants 8 équipés d'organes 17 de préhension en regard, montés mobiles en monte et baisse le long desdits montants 8. Les montants 8 positionnables au moins dans l'allée 7 centrale sont couplés à un système 9 d'entraînement en déplacement des montants 8 à l'intérieur de ladite enceinte 6, suivant au moins deux axes XX', YY' orthogonaux entre eux.

L'un des axes représentés en XX' aux figures correspond à un axe parallèle à l'axe longitudinal de l'allée centrale. L'autre axe représenté en YY' et dit horizontal permet un déplacement des montants 8 entre l'une des zones de porte-palettes bordant latéralement l'allée centrale et l'autre zone de porte-palettes bordant latéralement l'année centrale.

Dans les exemples représentés, chaque montant 8 comprend un organe 18 de transmission sans fin qui peut être formé par une chaîne ou une courroie et des moyens 19 d'entraînement en déplacement de l'organe 18 de transmission sans fin sur lui-même. Ces moyens 19 d'entraînement en déplacement de l'organe 18 de transmission sans fin sont des moyens 19 moteurs. En pratique, dans l'exemple représenté, chaque montant comprend une poulie supérieure disposée à l'extrémité supérieure du montant et une poulie inférieure disposée à l'extrémité inférieure du montant, et un organe de transmission sans fin tel qu'une chaîne ou une courroie s'enroulant au moins partiellement autour desdites poulies, pour former une boucle sans fin avec un brin 181 aller et 182 retour de la boucle, s'étendant parallèlement à l'axe longitudinal du montant 8. Chaque organe 17 de préhension équipant un montant 8 est couplé à l'un des brins 181 ou 182 de la boucle. Les organes 17 de préhension sont disposés à un même niveau d'un montant à l'autre.

Les moyens 19 d'entraînement en déplacement de l'organe 18 de transmission sans fin comprennent un moteur entraînant en rotation l'une des poulies et par suite, l'organe de transmission sans fin s'enroulant au moins partiellement autour des poulies. Ces moyens 19 d'entraînement en déplacement sont communs aux organes 18 de transmission de chacun des montants 8 pour permettre un déplacement en synchronisme des organes 17 de préshension.

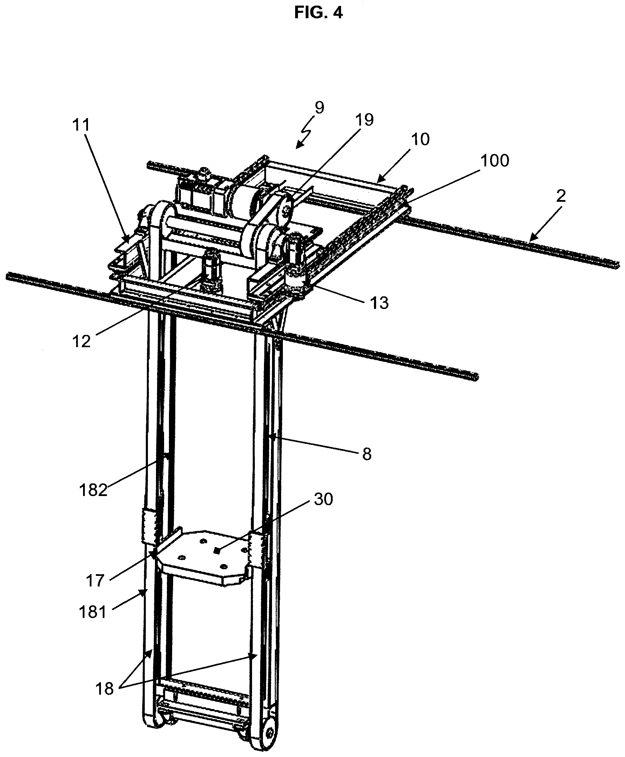

Chaque organe 17 de préhension équipant un montant 8 affecte la forme d'un doigt, d'un taquet ou d'une cornière en L. Dans l'exemple représenté, chaque organe 17 de préhension affecte la forme d'une cornière en L et une palette 30 est apte à reposer par l'un de ses bords sur la branche horizontale du L formée par la cornière, comme illustré à la figure 4. A cet effet, la palette 30 est d'aire supérieure aux porte-palettes ou au plateau de transfert pour faire saillie latéralement de la face du dessus des porte-palettes ou du plateau de transfert. Ces parties en saillie de la palette permettent une coopération avec les organes 17 de préhension disposés en vis-à-vis sur les montants.

Le système 9 d'entraînement en déplacement des montants 8 suivant les axes XX' et YY' comprend quant à lui un cadre 10 horizontal quadrangulaire monté sur le châssis 2 à coulissement suivant une direction parallèle à l'axe longitudinal de l'allée 7 centrale. Ce cadre 10 loge un support 11 auquel les montants 8 sont couplés. Ce support 11 est monté mobile à coulissement le long des bords 100 transversaux du cadre 10, ces bords 100 transversaux du cadre 10 s'étendant orthogonalement à l'axe longitudinal de l'allée 7 centrale.

Le support 11 est monté mobile à coulissement le long des bords 100 transversaux du cadre, par l'intermédiaire de moyens 13 moteurs d'entraînement en déplacement comprenant un moteur équipé par exemple d'un pignon rotatif en prise avec une crémaillère du support, le moteur étant porté par le cadre 10. Le cadre 10 est quant à lui monté sur le châssis 2 à coulissement suivant une direction parallèle à l'axe longitudinal de l'allée 7 centrale, par l'intermédiaire des moyens 12 moteurs d'entraînement en déplacement comprenant par exemple un moteur porté par le cadre, ce moteur étant équipé d'un pignon rotatif en prise avec une crémaillère ménagée le long de l'un des côtés longitudinaux de l'un des cadres constitutifs du châssis.

Les moteurs des moyens moteurs d'entraînement en déplacement du support et du cadre sont gérés via une unité de pilotage comprenant une interface homme/machine. Cette unité de pilotage est généralement apte également à communiquer avec le centre d'usinage.

Le système 5 de transfert comprend quant à lui un plateau 14 de transfert monté mobile suivant une direction transversale à l'axe longitudinal de l'allée 7 centrale, entre une zone 24 intérieure dans laquelle il est disposé à l'intérieur de l'enceinte 6 et est apte à coopérer avec le préhenseur 4 pour le transfert d'une palette 30 entre le préhenseur 4 et le plateau 14 de transfert, et une zone 25 dite extérieure dans laquelle il fait au moins partiellement saillie à l'extérieur de l'enceinte 6 et est apte à déposer ou prélever une palette 30 dans le centre d'usinage 31. A cet effet, le centre d'usinage 31 comprend une table agencée pour recevoir les palettes, cette table étant munie de plots en saillie de la face du dessus de la table sur lesquels la palette peut reposer à l'état posé par le plateau de transfert. De la même manière, cette palette posée sur les plots peut être prélevée par le plateau de transfert apte à s'insérer entre la face du dessus de la table supportant les plots et la palette. La hauteur des plots est donc supérieure à l'épaisseur du plateau de transfert.

Le plateau 14 de transfert est, pour son déplacement suivant une direction transversale à l'axe longitudinal de l'allée centrale entre la zone intérieure et la zone 25 extérieure, couplé à coulissement à un support 20 délimitant un chemin 21 de guidage du plateau 14 de transfert. Ce support 20 est un support mobile monté mobile en monte et baisse par rapport au châssis 2 et suivant une direction orthogonale à l'axe longitudinal de l'allée 7 centrale, pour former avec le plateau 14 de transfert, un ensemble télescopique.

Le support 20 est monté mobile suivant une direction orthogonale à l'axe longitudinal de l'allée centrale, par l'intermédiaire de moyens 23 moteurs disposés entre le support 20 et une base du support 20 solidaire du châssis. La base comprend une partie mobile et une partie fixe, fixée au châssis.

Les moyens 23 moteurs peuvent comprendre un moteur porté par la partie mobile de la base du support 20, ce moteur étant équipé d'un pignon rotatif en prise avec une crémaillère du support 20 pour un déplacement en va et vient du support 20 suivant une direction orthogonale à l'axe longitudinal de l'allée centrale.

La partie mobile de la base est elle-même montée mobile en monte et baisse par rapport à la partie fixe de la base, par l'intermédiaire de moyens 22 moteurs disposés entre les parties fixe et mobile de la base. Ces moyens 22 moteurs peuvent comprendre un moteur entraînant une vis à bille, ce moteur étant disposé sur la partie fixe de la base, la vis s'insérant dans un palier couplé à la partie mobile de la base.

Le plateau 14 de transfert qui, pour son déplacement suivant une direction transversale à l'axe longitudinal de l'allée 7 centrale entre la zone 24 intérieure et la zone 25 extérieure, est couplé à coulissement au support 20, est équipé de moyens 26 moteurs d'entraînement en déplacement à coulissement disposés entre le plateau 14 de transfert et le support 20. Ces moyens 26 moteurs peuvent comprendre un moteur porté par le plateau 14 de transfert, ce moteur comprenant un pignon rotatif en prise avec une crémaillère équipant le support 20, pour un déplacement en va et vient du plateau 14 de transfert par rapport au support 20.

Les moyens 23 moteurs d'entraînement en déplacement du support 20 suivant une direction orthogonale à l'axe longitudinal de l'allée 7 centrale, les moyens 22 moteurs d'entraînement en déplacement en monte et baisse du support 20 par rapport au châssis et les moyens 26 moteurs d'entraînement en déplacement à coulissement du plateau 14 de transfert par rapport au support 20 comprennent tous un moteur et une unité de pilotage du moteur. Cette unité de pilotage peut être commune à l'ensemble des moteurs des moyens 22, 26 et 23 moteurs. Cette unité de pilotage peut également être commune avec l'unité de pilotage des moteurs des moyens 12 et 13 moteurs d'entraînement en déplacement du cadre 10 et du support 11 du préhenseur.

Cette unité de pilotage peut comprendre une interface homme/machine pour permettre une gestion automatisée ou manuelle des mouvements du cadre et du support du préhenseur d'une part, et des mouvements du plateau de transfert et du support du système de transfert d'autre part. Cette unité de pilotage permet également la gestion des organes de préhension des montants et de leur déplacement. En particulier, les mouvements du cadre et du support du préhenseur et du plateau de transfert et du support du système de transfert peuvent être mémorisés et des capteurs peuvent être prévus pour détecter la présence de palettes sur les porte-palettes ou sur le plateau de transfert.

Un tel pilotage est classique et bien connu à ceux versés dans cet art, il ne sera donc pas décrit en détail.

Dans l'exemple représenté, le plateau 14 de transfert est partiellement évidé, pour conférer au plateau la forme d'une fourche à doigts parallèles.

Ce plateau 14 de transfert s'étend en porte-à-faux par rapport au chemin 21 de guidage dans la position dans laquelle il est disposé dans la zone 25 extérieure. Dans cette position en porte-à-faux, le plateau 14 de transfert peut s'étendre à l'aplomb ou à proximité de la table d'usinage du centre d'usinage.

Ce plateau 14 de transfert est, à l'état disposé dans la zone 24 intérieure, configuré pour occuper au moins une première position dans laquelle il est disposé dans l'allée 7 centrale et une deuxième position dans laquelle il est disposé dans l'une des zones de porte-palettes bordant l'allée centrale. En variante, le plateau de transfert peut, à l'état disposé dans la zone 24 intérieure, être configuré pour occuper uniquement une position dans laquelle il est disposé dans l'une des zones de porte-palettes bordant l'allée centrale.

Grâce aux possibilités de déplacement du préhenseur, les montants 8 du préhenseur 4 sont positionnables, d'une part de part et d'autre du plateau 14 de transfert, d'autre part de part et d'autre de l'un quelconque des porte-palettes pour permettre, à l'aide des organes 17 de préhension équipant lesdits montants 8, une prise par le dessous d'une palette 30 reposant sur le porte-palette 3 ou sur le plateau 14 de transfert ou une pose d'une palette 30 sur le porte-palette 3 ou sur le plateau 14 de transfert. A chaque fois, les organes 17 de préhension prennent appui par le dessous sur les parties des palettes en saillie des porte-palettes ou du plateau de transfert à l'état posé d'une palette sur un porte-palette ou un plateau de transfert. Les organes de préhension prennent donc appui sur la face du dessous des palettes.

En pratique, la manutention d'une palette en vue de l'usinage de la pièce portée par la palette s'opère comme suit : la palette et la pièce associée sont positionnées par un opérateur sur un porte-palette formant le poste de chargement du dispositif. Les montants du préhenseur viennent se positionner de part et d'autre du porte-palette et les organes de préhension sont disposés sous la palette et entraînés en déplacement en élévation pour permettre une prise par le dessous de la palette.

La palette est soulevée pour être écartée du porte-palette. Les montants du préhenseur sont entraînés en déplacement pour revenir dans l'allée centrale et venir se positionner au niveau du système de transfert. Les montants peuvent être alors disposés de part et d'autre du plateau de transfert, par déplacement relatif des montants et du plateau de transfert.

La palette disposée au-dessus du plateau de transfert est alors déposée sur le plateau de transfert, par déplacement dans le sens d'un abaissement des organes de préhension équipant les montants.

Le plateau de transfert et la palette associée sont entraînés en déplacement vers l'extérieur de l'enceinte, jusqu'au centre d'usinage où la palette peut être disposée dans le centre d'usinage. Généralement, le plateau de transfert revient à l'intérieur de l'enceinte, pendant la phase d'usinage.

Lorsque l'usinage est achevé, le plateau de transfert vient reprendre la palette et est déplacé en direction de l'intérieur de l'enceinte du châssis. À l'intérieur du châssis, la palette peut être prise par le dessous par les organes de préhension des montants du préhenseur, et être écartée par soulèvement du plateau de transfert. Les montants du système de transfert sont entraînés en déplacement jusqu'à venir se positionner de part et d'autre d'un porte-palette du châssis sur lequel la palette peut être déposée. Ce porte-palette peut être le même que celui sur lequel la palette a été déposée initialement, ou un autre porte-palette.

Un nouveau cycle de manutention peut commencer.

## Revendications

1. Dispositif (1) de manutention de pièces stockées sur palettes (30) positionnable au voisinage d'un centre (31) d'usinage, ce dispositif (1) de manutention comprenant un châssis (2) équipé de porte-palettes (3), un préhenseur (4) et un système (5) de transfert pour le transfert des pièces à traiter entre le dispositif (1) de manutention et le centre (31) d'usinage, ledit châssis (2) délimitant une enceinte (6) comprenant une allée (7) centrale bordée latéralement des porte-palettes (3) organisés en lignes et en colonnes, le préhenseur (4) comprenant deux montants (8) équipés d'organes (17) de préhension en regard montés mobiles en monte et baisse le long desdits montants (8), lesdits montants (8) positionnables au moins dans l'allée (7) centrale étant couplés à un système (9) d'entrainement en déplacement des montants (8) à l'intérieur de ladite enceinte (6) suivant au moins deux axes (XX', YY') orthogonaux entre eux, l'un (XX') des axes correspondant à un axe parallèle à l'axe longitudinal de l'allée (7) centrale,
**caractérisé en ce que** le système (5) de transfert comprend un plateau (14), dit de transfert, monté mobile suivant une direction transversale à l'axe longitudinal de l'allée (7) centrale entre une zone (24) dite intérieure, dans laquelle il est disposé à l'intérieur de l'enceinte (6) et est apte à coopérer avec le préhenseur (4), pour le transfert d'une palette (30) entre le préhenseur (4) et le plateau (14) de transfert, et une zone (25) dite extérieure, dans laquelle il fait saillie au moins partiellement à l'extérieur de l'enceinte (6), et est apte à déposer ou prélever une palette (30) dans le centre d'usinage (31), et **en ce que** les montants (8) du préhenseur (4) sont positionnables d'une part, de part et d'autre du plateau (14) de transfert, d'autre part, de part et d'autre de l'un quelconque des porte-palettes (3), pour permettre, à l'aide des organes (17) de préhension équipant lesdits montants (8), une prise par le dessous d'une palette (30) reposant sur le porte-palette (3) ou sur le plateau (14) de transfert, ou une pose d'une palette (30) sur le porte-palette (3) ou sur le plateau (14) de transfert.

2. Dispositif (1) de manutention selon la revendication 1, **caractérisé en ce que** les porte-palettes (3) sont stationnaires à l'intérieur de l'enceinte (6) délimitée par le châssis (2).

3. Dispositif (1) de manutention selon l'une des revendications 1 ou 2, **caractérisé en ce que** les porte-palettes (3) présentent une face (15) de dessus sur laquelle une palette (30) est apte à reposer par sa face dite du dessous, la face (15) du dessus des porte-palettes (3) étant munie de motifs (16) en creux ou en relief aptes à coopérer avec des motifs de forme complémentaires aptes à être ménagés sur la face du dessous des palettes (30) positionnables sur les porte-palettes (3).

4. Dispositif (1) de manutention selon l'une des revendications 1 à 3, **caractérisé en ce que** le système (9) d'entrainement des montants (8) comprend un cadre (10), dit horizontal, quadrangulaire monté sur le châssis (2) à coulissement suivant une direction parallèle à l'axe longitudinal de l'allée (7) centrale, ce cadre (10) logeant un support (11) auquel les montants (8) sont couplés, ce support (11) étant monté mobile à coulissement le long des bords (100) dits transversaux du cadre (10), ces bords (100) transversaux du cadre (10) s'étendant orthogonalement à l'axe longitudinal de l'allée (7) centrale.

5. Dispositif (1) de manutention selon l'une des revendications 1 à 4, **caractérisé en ce que** chaque montant (8) comprend un organe (18) de transmission sans fin et des moyens (19) d'entrainement en déplacement dudit organe (18) de transmission sans fin, ledit organe (18) de transmission sans fin affectant la forme d'une boucle sans fin avec un brin (181) aller et un brin (182) retour de la boucle s'étendant parallèlement à l'axe longitudinal du montant (8), chaque organe (17) de préhension équipant un montant (8) étant couplé à l'un des brins (181, 182) de la boucle.

6. Dispositif (1) de manutention selon l'une des revendications 1 à 5, **caractérisé en ce que** chaque organe (17) de préhension équipant un montant (8) affecte la forme d'un doigt, d'un taquet ou d'une cornière en L.

7. Dispositif (1) de manutention selon l'une des revendications 1 à 6, **caractérisé en ce que** le plateau (14) de transfert est, pour son déplacement suivant une direction transversale à l'axe longitudinal de l'allée (7) centrale entre la zone (24) intérieure et la zone (25) extérieure, couplé à coulissement à un support (20) délimitant un chemin (21) de guidage du plateau (14) de transfert, ce support (20) étant monté mobile en monte et baisse par rapport au châssis (2).

8. Dispositif (1) de manutention selon la revendication 7, **caractérisé en ce que** le plateau (14) de transfert s'étend en porte à faux par rapport au chemin (21) de guidage, dans la position dans laquelle il est disposé dans la zone (25) extérieure.

9. Dispositif (1) de manutention selon l'une des revendications 7 ou 8, **caractérisé en ce que** le support (20) est un support mobile suivant une direction orthogonale à l'axe longitudinal de l'allée (7) centrale pour former avec le plateau (14) de transfert un ensemble télescopique.

10. Dispositif (1) de manutention selon l'une des revendications 1 à 9, **caractérisé en ce que** le plateau (14) de transfert est, à l'état disposé dans la zone (24) intérieure, configuré pour occuper au moins une première position, dans laquelle il est disposé dans l'allée (7) centrale, et une deuxième position, dans laquelle il est disposé dans l'une des zones de porte-palettes (3) bordant l'allée (7) centrale.

## Patentansprüche

1. Fördervorrichtung (1) für auf Paletten (30) gelagerte Teile, die in der Nähe eines Verarbeitungszentrums (31) positionierbar ist, wobei diese Fördervorrichtung (1) ein Gestell (2) umfasst, das mit Palettenträgern (3) ausgestattet ist, einen Greifer (4) und ein Transfersystem (5) für den Transfer der zu bearbeitenden Teile zwischen der Fördervorrichtung (1) und dem Verarbeitungszentrum (31), wobei das Gestell (2) einen Bereich (6) begrenzt, der eine zentrale Allee (7) umfasst, die seitlich von den Palettenträgern (3) gesäumt ist, die in Zeilen und in Spalten organisiert sind, wobei der Greifer (4) zwei Holme (8) umfasst, die mit zugewandten Greiforganen (17) ausgestattet sind, die nach oben und nach unten entlang der Holme (8) beweglich sind, wobei die mindestens in der zentralen Allee (7) positionierbaren Holme (8) mit einem Verlagerungs-Antriebssystem (9) der Holme (8) innerhalb des Bereichs (6) gemäß mindestens zwei zueinander orthogonalen Achsen (XX', YY') gekoppelt sind, wobei die eine (XX') der Achsen einer zur Längsachse der zentralen Allee (7) parallelen Achse entspricht,
**dadurch gekennzeichnet, dass** das Transfersystem (5) eine Transferplatte (14) umfasst, die gemäß einer zur Längsachse der zentralen Allee (7) transversalen Richtung zwischen einer inneren Zone (24), in welcher sie innerhalb des Bereichs (6) angeordnet ist und imstande ist, mit dem Greifer (4) für den Transfer einer Palette (30) zwischen dem Greifer (4) und der Transferplatte (14) zusammenzuwirken, und einer äußeren Zone (25), in welcher sie mindestens teilweise aus dem Bereich (6) herausragt und imstande ist, eine Palette (30) im Bearbeitungszentrum (31) abzustellen oder dort zu entnehmen, beweglich angebracht ist, und dass die Holme (8) des Greifers (4) zum einen beiderseits der Transferplatte (14), andererseits beiderseits von einem beliebigen der Palettenträger (3) positionierbar sind, um mit Hilfe der Greiforgane (17), welche die Holme (8) ausstatten, ein Ergreifen von unten einer Palette (30), die auf dem Palettenträger (3) oder auf der Transferplatte (14) ruht, oder ein Abstellen einer Palette (30) auf dem Palettenträger (3) oder auf der Transferplatte (14) zu erlauben.

2. Fördervorrichtung (1) nach Anspruch 1, **dadurch gekennzeichnet, dass** die Palettenträger (3) innerhalb des von dem Gestell (2) begrenzten Bereichs (6) stationär sind.

3. Fördervorrichtung (1) nach einem der Ansprüche 1 oder 2, **dadurch gekennzeichnet, dass** die Palettenträger (3) eine Oberseite (15) aufweisen, auf der eine Palette (30) imstande ist, mit ihrer Unterseite zu ruhen, wobei die Oberseite (15) der Palettenträger (3) mit hohlen oder Reliefmotiven (16) versehen ist, die imstande sind, mit Motiven in komplementären Formen zusammenzuwirken, die imstande sind, auf der Unterseite der Paletten (30) eingerichtet zu sein, die auf den Palettenträgern (3) positionierbar sind.

4. Fördervorrichtung (1) nach einem der Ansprüche 1 bis 3, **dadurch gekennzeichnet, dass** das Antriebssystem (9) der Holme (8) einen horizontalen viereckigen Rahmen (10) umfasst, der auf dem Gestell (2) gleitend in einer Richtung parallel zur Längsachse der zentralen Allee (7) angebracht ist, wobei dieser Rahmen (10) einen Halter (11) aufnimmt, mit dem die Holme (8) gekoppelt sind, wobei dieser Halter (11) entlang der transversalen Ränder (100) des Rahmens (10) gleitend beweglich angebracht ist, wobei sich diese transversalen Ränder (100) des Rahmens (10) orthogonal zur Längsachse der zentralen Allee (7) erstrecken.

5. Fördervorrichtung (1) nach einem der Ansprüche 1 bis 4, **dadurch gekennzeichnet, dass** jeder Holm (8) ein Endlos-Übertragungsorgan (18) und Verlagerungs-Antriebsmittel (19) des Endlos-Übertragungsorgans (18) umfasst, wobei das Endlos-Übertragungsorgan (18) die Form einer Endlosschleife mit einem Hin-Zweig (181) und einem Her-Zweig (182) der Schleife zeigt, die sich parallel zur Längsachse des Holms (8) erstrecken, wobei jedes Greiforgan (17), das einen Holm (8) ausstattet, an einen der Zweige (181, 182) der Schleife gekoppelt ist.

6. Fördervorrichtung (1) nach einem der Ansprüche 1 bis 5, **dadurch gekennzeichnet, dass** jedes Greiforgan (17), das einen Holm (8) ausstattet, die Form eines Fingers, eines Riegels oder einer Ecke in L-Form zeigt.

7. Fördervorrichtung (1) nach einem der Ansprüche 1 bis 6, **dadurch gekennzeichnet, dass** die Transferplatte (14) für ihre Verlagerung gemäß einer zur Längsachse der zentralen Allee (7) zwischen der inneren Zone (24) und der äußeren Zone (25) transversalen Richtung gleitend mit einem Halter (20) gekoppelt ist, der einen Führungsweg (21) der Transferplatte (14) begrenzt, wobei dieser Halter (20) nach oben und nach unten in Bezug auf das Gestell (2) beweglich angebracht ist.

8. Fördervorrichtung (1) nach Anspruch 7, **dadurch gekennzeichnet, dass** sich die Transferplatte (14) in der Position, in welcher sie in der äußeren Zone (25) angeordnet ist, überhängend in Bezug auf den Führungsweg (21) erstreckt.

9. Fördervorrichtung (1) nach einem der Ansprüche 7 oder 8, **dadurch gekennzeichnet, dass** der Halter (20) ein gemäß einer zur Längsachse der zentralen Allee (7) orthogonalen Richtung beweglicher Halter ist, um mit der Transferplatte (14) eine Teleskopeinheit zu bilden.

10. Fördervorrichtung (1) nach einem der Ansprüche 1 bis 9, **dadurch gekennzeichnet, dass** die Transferplatte (14) im in der unteren Zone (24) angeordneten Zustand ausgelegt ist, um mindestens eine erste Position einzunehmen, in welcher sie in der zentralen Allee (7) angeordnet ist, und eine zweite Position, in welcher sie in der einen der Zonen von Palettenträgern (3) angeordnet ist, die die zentrale Allee (7) säumen.

## Claims

1. A device (1) for handling parts stored on pallets (30) positionable in the vicinity of a machining center (31), this handling device (1) comprising a chassis (2) equipped with pallet carriers (3), a gripper (4) and a transfer system (5) for transferring parts to be handled between the handling device (1) and the machining center (31), said chassis (2) delimiting an enclosure (6) comprising a central aisle (7) laterally bordered by pallet carriers (3) organized in rows and columns, the gripper (4) comprising two uprights (8) equipped with opposite gripping members (17) mounted moving up and down along said uprights (8), said uprights (8) positionable at least in the central aisle (7) being coupled to a system (9) for driving the movement of the uprights (8) inside said enclosure (6) along at least two axes (XX', YY') that are orthogonal with respect to one another, one (XX') of the axes corresponding to an axis parallel to the longitudinal axis of the central aisle (7),
**characterized in that** the transfer system (5) comprises a tray (14), called transfer tray, mounted moving along a direction that is transverse with respect to the longitudinal axis of the central aisle (7) between a so-called inner zone (24), in which it is arranged inside the enclosure (6) and is able to cooperate with the gripper (4), to transfer a pallet (30) between the gripper (4) and the transfer tray (14), and a so-called outer zone (25), in which protrudes at least partially outside the enclosure (6), and is able to set down or pick up a pallet (30) in the machining center (31), and **in that** the uprights (8) of the gripper (4) are positionable on the one hand, on either side of the transfer tray (14), and on the other hand, on either side of any one of the pallet carriers (3), to make it possible, using gripping members (17) equipping said uprights (8), to pick up a pallet (30) from underneath that is resting on the pallet carrier (3) or on the transfer tray (14), or to set down a pallet (30) on the pallet carrier (3) or on the transfer tray (14).

2. The handling device (1) according to claim 1, **characterized in that** the pallet carriers (3) are stationary inside the enclosure (6) delimited by the chassis (2).

3. The handling device (1) according to one of claims 1 or 2, **characterized in that** the pallet carriers (3) have a top face (15) on which a pallet (30) can rest by its so-called bottom face, the top face (15) of the pallet carriers (3) being provided with hollow or raised patterns (16) able to cooperate with patterns of complementary shape able to be arranged on the bottom face of the pallets (30) positionable on the pallet carrier (3).

4. The handling device (1) according to one of claims 1 to 3, **characterized in that** the drive system (9) of the uprights (8) comprises a quadrangular so-called horizontal frame (10) mounted on the chassis (2) sliding along a direction parallel to the longitudinal axis of the central aisle (7), this frame (10) housing a support (11) with which the uprights (8) are coupled, this support (11) being mounted sliding along the so-called transverse edges (100) of the frame (10), these transverse edges (100) of the frame (10) extending orthogonally with respect to the longitudinal axis of the central aisle (7).

5. The handling device (1) according to one of claims 1 to 4, **characterized in that** each upright (8) comprises an endless transmission member (18) and means (19) for driving the movement of said endless transmission member (18), said endless transmission member (18) assuming the form of an endless loop with an outgoing strand (181) and a return strand (182) of the loop extending parallel to the longitudinal axis of the upright (8), each gripping member (17) equipping an upright (8) being coupled to one of the strands (181, 182) of the loop.

6. The handling device (1) according to one of claims 1 to 5, **characterized in that** each gripping member (17) equipping an upright (8) assumes the form of a finger, a cleat or an L-shaped angle iron.

7. The handling device (1) according to one of claims 1 to 6, **characterized in that** the transfer tray (14) is, for its movement in a direction transverse to the longitudinal axis of the central aisle (7) between the inner zone (24) and the outer zone (25), slidingly coupled to a support (20) delimiting a guide path (21) of the transfer tray (14), this support (20) being mounted moving up and down relative to the chassis (2).

8. The handling device (1) according to claim 7, **characterized in that** the transfer tray (14) extends cantilevered relative to the guide path (21), in the position in which it is arranged in the outer zone (25).

9. The handling device (1) according to one of claims 7 or 8, **characterized in that** the support (20) is a movable support in a direction orthogonal to the longitudinal axis of the central aisle (7) in order to form a telescoping assembly with the transfer tray (14).

10. The handling device (1) according to one of claims 1 to 9, **characterized in that** the transfer tray (14) is, in the state arranged in the inner zone (24), configured to occupy at least a first position, in which it is arranged in the central aisle (7), and a second position, in which it is arranged in one of the pallet carrier zones (3) bordering the central aisle (7).
